## Europäisches Patentamt

## European Patent Office

## Office européen des brevets

(19)

(11) Veröffentlichungsnummer: **0 219 688 B1**

(12)

# EUROPÄISCHE PATENTSCHRIFT

(45) Veröffentlichungstag der Patentschrift:
27.12.90

(51) Int. Cl.⁵: **H02K 1/27**

(21) Anmeldenummer: 86112808.0

(22) Anmeldetag: 16.09.86

(54) Elektromotorischer Plattenspeicherantrieb.

(30) Priorität: 30.09.85 DE 3534852

(43) Veröffentlichungstag der Anmeldung:
29.04.87 Patentblatt 87/18

(45) Bekanntmachung des Hinweises auf die Patenterteilung:
27.12.90 Patentblatt 90/52

(84) Benannte Vertragsstaaten:
AT CH DE FR IT LI NL

(56) Entgegenhaltungen:
DE-A- 3 135 385
FR-A- 825 414
FR-A- 1 139 375
FR-A- 2 122 111
FR-A- 2 234 691
FR-A- 2 267 650

PATENTS ABSTRACTS OF JAPAN, Band 6,
Nr. 182 (E-131)[1060], 18. September 1982; &
JP-A-57 97 354 (HITACHI SEISAKUSHO K.K.) 17-06-1982

(73) Patentinhaber: Siemens Aktiengesellschaft,
Wittelsbacherplatz 2, D-8000 München 2(DE)
Patentinhaber: FAG KUGELFISCHER GEORG SCHÄFER
Kommanditgesellschaft auf Aktien,
Georg-Schäfer-Strasse 30 Postfach 1260,
D-8720 Schweinfurt(DE)

(72) Erfinder: Dierkes, Albert, Dipl.-Ing., Galileistrasse 10,
D-8033 Planegg(DE)
Erfinder: Grecksch, Ernst, Dr.,
Konrad-Adenauer-Strasse 47, D-8702 Estenfeld(DE)
Erfinder: Gilly, Joachim, Dipl.-Ing. (FH),
Riemenschneiderstrasse 28, D-8702 Estenfeld(DE)
Erfinder: Schellenberger, Friedrich, Oberfeldstrasse 18,
D-8783 Hammelburg(DE)

(74) Vertreter: Fuchs, Franz-Josef, Dr.-Ing. et al,
Postfach 22 13 17, D-8000 München 22(DE)

**Beschreibung**

Die Erfindung bezieht sich auf einen elektromotorischen Plattenspeicherantrieb gemäß Oberbegriff des Anspruchs 1; ein derartiger Plattenspeicherantrieb ist bekannt.

Bei den bekannten derartigen Antrieben ist der elektromotorische Antrieb in einem gegenüber dem die Speicherplatten aufnehmenden sogenannten Reinraum abgedichteten gesonderten Motorraum angeordnet. Üblicherweise werden die dabei verwendeten Magnete als Rohling aus der Druckform genommen und anschließend an ihrer Oberfläche geschliffen; dadurch besteht die Gefahr, daß Schleifpartikel haften bleiben, bzw. in der Weiterverarbeitung insbesondere durch Kantenausbrüche Partikel abgesondert werden, die dann den die Speicherplatten aufnehmenden Reinraum verschmutzen würden, wenn Motorraum einerseits und Reinraum andererseits nicht gegeneinander isoliert wären.

Durch die FR-A-2 267 650 ist eine dauermagneterregte elektrische Maschine mit einem Außenläufer mit an dessen Innenumfang in Nuten gehaltenen Permanentmagneten bekannt, deren Außenflächen mit einer dünnen Deckschicht aus Kupfer als Korrosionsschutz und zur Festigkeitserhöhung bei hohen Drehgeschwindigkeiten versehen sind.

Durch die DE-A-3 135 385 ist ein Außenläufer-Plattenspeicherantrieb bekannt, bei dem ein permanenterregter Außenläufermotor mit einer Mehrzahl von Dauermagnetsegmenten bzw. mit einem in der einzigen Darstellung offenbarten, einteiligen Dauerringmagnet getrennt durch einen Magnetflansch außerhalb des für die Speicherplatten vorgesehenen Aufnahmeteils vorgesehen ist.

Gemäß Aufgabe vorliegender Erfindung soll der Einsatz von an sich preiswerten dauermagneterregten Motoren auch bei solchen Plattenspeicherantrieben ermöglicht werden, bei denen zur Erzielung einer hohen Speicherdichte und eines möglichst kleinen Bauvolumens der Antriebsmotor im Zentrum des Speichers und somit innerhalb des Speicherraums angeordnet ist; für einen derartigen Einsatz ist es erforderlich, daß jede Verschmutzungsgefahr durch den Antriebsmotor gebannt ist; es hat sich jedoch gezeigt, daß bei herkömmlichen dauermagneterregten Motoren eine Partikelabsonderung auch trotz eines vorherigen intensiven Waschvorganges beim betriebmäßigen Einsatz der Motoren nicht ganz verhindert werden kann.

Die Verhinderung einer Partikelabsonderung und damit der Einsatz vondauermagneterregten Antriebsmotoren auch innerhalb des Speicherraums eines Plattenspeichers ist erfindungsgemäß jedoch ohne weiteres und mit geringem zusätzlichen Aufwand dann möglich, wenn der Ferritkern durch eine Oberflächen-Metallbeschichtung versiegelt ist, wodurch zusätzlich in für den Einsatz derartiger Motoren zur Erzielung eines nur geringen Luftspaltes vorteilhafter Weise der Schutz vor jeglicher Partikelabsonderung bei einer nur geringen und über die gesamte Oberfläche gleichmäßigen Schichtdicke der Versiegelung gewährleistet werden kann.

Eine besonders wirksame und gut haftende Oberflächen-Metallbeschichtung hat sich bei einer Nickelmetallbeschichtung ergeben, die zweckmäßigerweise chemisch aufgetragen ist. Neben der chemischen Auftragung der versiegelten Oberflächen-Metallbeschichtung kann auch eine galvanische oder aufgedampfte Beschichtung vorgesehen werden.

Die Erfindung wird im folgenden anhand eines schematisch dargestellten Ausführungsbeispiels in der Zeichnung näher erläutert; darin zeigen:

Fig. 1 den Läufer eines dauermagneterregten elektromotorischen Plattenspeicherantriebes mit mehreren teilschalenförmigen Sinter-Ferritmagneten,

Fig. 2 einen einzelnen Sinter-Ferritmagenten im Schnitt gemäß Schnittverlauf II-II in Fig. 3,

Fig. 3 die radiale Draufsicht auf einen einzelnen Sinter-Ferritmagneten.

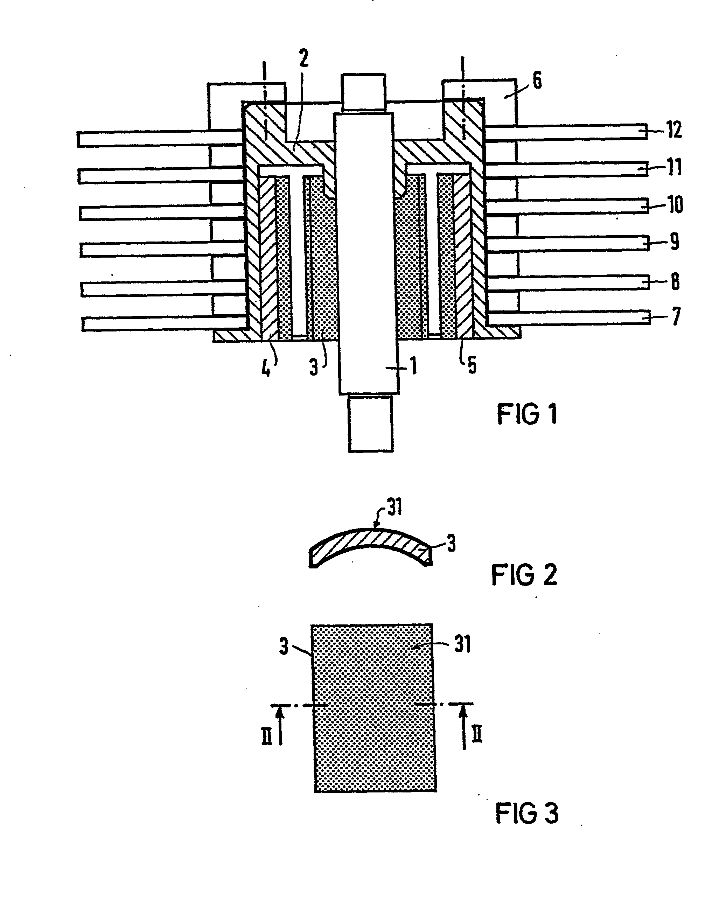

Fig. 1 zeigt den Außenläufer eines innerhalb des Speicherraums angeordneten elektromotorischen Plattenspeicherantriebes mit Dauermagneterregung. An einer auf der Läuferwelle 1 des elektromotorischen Plattenspeicherantriebes befestigten Nabe 2 sind an deren Außenfläche Speicherplatten 7-12 mittels eines Spannringes 6 und an dessen Innenfläche als Erregermagnete vier teilschalenförmige Sinter-Ferritmagnete gehalten, von denen in der Zeichnung drei Sinter-Ferritmagnete 3,4,5 ersichtlich sind.

Wie insbesondere anhand eines einzelnen, in Fig. 2 im Schnittbild dargestellten Sinter-Ferritmagneten 3 ersichtlich, ist die Oberfläche der Sinter-Ferritmagnete erfindungsgemäß jeweils durch eine, hier mit dem Bezugszeichen 31 versehene, Oberflächen-Metallbeschichtung versiegelt.

**Patentansprüche**

1. Elektromotorischer Plattenspeicherantrieb mit einem durch teilschalenförmige Sinter-Ferritmagnete (3, 4, 5) dauermagneterregten Außenläufer-Motor,
**dadurch gekennzeichnet,**
daß der Außenläufer-Motor innerhalb des Speicherraums des Plattenspeichers angeordnet und die Sinter-Ferritmagnete (3, 4, 5) durch eine Oberflächen-Metallbeschichtung (31) versiegelt sind.

2. Elektromotorischer Plattenspeicherantrieb nach Anspruch 1,
**dadurch gekennzeichnet,**
daß eine chemisch aufgetragene Oberflächen-Metallbeschichtung (31) für die Sinter-Ferritmagnete (3, 4, 5) vorgesehen ist.

3. Elektromotorischer Plattenspeicherantrieb nach Anspruch 1,
**dadurch gekennzeichnet,**
daß eine galvanisch aufgetragene Oberflächen-Metallbeschichtung (31) für die Sinter-Ferritmagnete (3, 4, 5) vorgesehen ist.

4. Elektromotorischer Plattenspeicherantrieb nach Anspruch 1,
**dadurch gekennzeichnet,**

daß eine durch Aufdampfen aufgetragene Oberflächen-Metallbeschichtung (31) für die Sinter-Ferritmagnete (3, 4, 5) vorgesehen ist.

5. Elektromotorischer Plattenspeicherantrieb nach zumindest einem der Ansprüche 1 bis 4, **dadurch gekennzeichnet,** daß der Ferritmagnet durch eine Oberflächen-Nickelmetallbeschichtung (31) für die Sinter-Ferritmagnete (3, 4, 5) versiegelt ist.

## Claims

1. An electromotive drive for a disc memory with an external-rotor motor permanently magnetically excited by partially shell-shaped sintered-ferrite magnets (3, 4, 5), characterised in that the external-rotor motor is arranged within the storage space of the disc storage and the sintered-ferrite magnets (3, 4, 5) are sealed by a surface metal coating (31).

2. An electromotive drive for a disc memory according to claim 1, characterised in that a chemically applied surface metal coating (31) is provided for the sintered-ferrite magnets (3, 4, 5).

3. An electromotive drive for a disc memory according to claim 1, characterised in that a galvanically applied surface metal coating (31) is provided for the sintered-ferrite magnets (3, 4, 5).

4. An electromotive drive for a disc memory according to claim 1, characterised in that a surface metal coating (31) applied by vapor deposition is provided for the sintered-ferrite magnets (3, 4, 5).

5. An electromotive drive for a disc memory according to at least one of claims 1 to 4, characterised in that the ferrite magnet is sealed by a surface nickel metal coating (31) for the sintered-ferrite magnets (3, 4, 5).

## Revendications

1. Dispositif d'entraînement à moteur électrique pour une mémoire à disques, comportant un moteur à rotor extérieur excité par des aimants permanents en ferrite frittée (3, 4, 5) formant des coques partielles, caractérisé par le fait que le moteur à rotor extérieur est disposé à l'intérieur de l'espace de la mémoire à disques et que les aimants en ferrite frittée (3, 4, 5) sont enrobés d'un revêtement métallique superficiel (31).

2. Dispositif d'entraînement à moteur électrique pour une mémoire à disques suivant la revendication 1, caractérisé par le fait qu'il est prévu un revêtement métallique superficiel (31) déposé chimiquement pour les aimants (3, 4, 5) formés de ferrite frittée.

3. Dispositif d'entraînement à moteur électrique pour une mémoire à disques suivant la revendication 1, caractérisé par le fait qu'il est prévu un revêtement métallique superficiel (31) déposé galvaniquement, pour les aimants (3, 4, 5) en ferrite frittée.

4. Dispositif d'entraînement à moteur électrique pour mémoire à disques suivant la revendication 1, caractérisé par le fait qu'il est prévu un revêtement métallique superficiel (31) déposé par évaporation pour les aimants (3, 4, 5) en ferrite frittée.

5. Dispositif d'entraînement à moteur électrique pour une mémoire à disques suivant au moins l'une des revendications 1 à 4, caractérisé par le fait que l'aimant en ferrite est enrobé d'un revêtement métallique superficiel de nickel (31), pour les aimants (3, 4, 5) en ferrite frittée.

FIG 1

FIG 2

FIG 3